(19) Europäisches Patentamt / European Patent Office / Office européen des brevets

(11) **EP 2 315 056 A1**

(12) **EUROPEAN PATENT APPLICATION**

(43) Date of publication:
**27.04.2011 Bulletin 2011/17**

(51) Int Cl.:
***G01V 3/24*** *(2006.01)*

(21) Application number: **09174014.2**

(22) Date of filing: **26.10.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR** | (72) Inventors:<br>• **Hayman, Andrew**<br>  **78960 Voisins-le-Bretonneux (FR)**<br>• **Bloemenkamp, Richard**<br>  **92142 Clamart (FR)**<br>• **Cheung, Philip**<br>  **92142 Clamart (FR)**<br>• **Vessereau, Patrick**<br>  **92142 Clamart (FR)**<br>• **Petit, Pierre-Marie**<br>  **92142 Clamart (FR)**<br>• **Moise, Stefan**<br>  **92142 Clamart (FR)** |
| (71) Applicants:<br>• **Services Pétroliers Schlumberger**<br>  **75007 Paris (FR)**<br>  Designated Contracting States:<br>  **FR**<br>• **SCHLUMBERGER TECHNOLOGY B.V.**<br>  **2514 JG  The Hague (NL)**<br>  Designated Contracting States:<br>  **BG CZ DE DK GR HU IE IT LT NO PL RO SI SK TR**<br>• **Schlumberger Holdings Limited**<br>  **Tortola (VG)**<br>  Designated Contracting States:<br>  **GB NL**<br>• **Prad Research Development Limited**<br>  **Tortola (VG)**<br>  Designated Contracting States:<br>  **AT BE CH CY EE ES FI HR IS LI LU LV MC MK MT PT SE SM** | (74) Representative: **Hyden, Martin Douglas et al**<br>**Etudes et Productions Schlumberger**<br>**Intellectual Property Department**<br>**1 rue Henri Becquerel**<br>**B.P. 202**<br>**92142 Clamart Cedex (FR)** |

(54) **Apparatus and Method for Investigating Boreholes filled with Conductive and Non-Conductive Fluids**

(57)    An apparatus for investigating a formation surrounding a borehole, comprising:

- a first electrode (10) for injecting a current into the formation;
- a guard electrode adjacent the first electrode, the guard electrode being held at the same voltage as the first electrode;
- a return electrode (6), insulated (12) from and spaced from the first electrode and guard electrode (14), for returning current passing through the formation from the first electrode (10) and guard electrode (14); and
- a signal source (18) connected between the first electrode (10) and the return electrode (6) and operable to generate an injection current at either a first, lower frequency suitable for measurements when the borehole is filled with a substantially conductive fluid, or a second, higher frequency for measurements when the borehole is filled with a substantially non-conductive fluid.

Figure 1

## Description

## Technical field

This invention relates tools for investigating boreholes. In particular, the invention can be applied to imaging tools for use in downhole environments in gas and oil wellbores.

## Background art

Injection imaging techniques are well known and widely used to provide information about the formation surrounding a wellbore.

In current injection imaging techniques, a current injection imager applies an AC potential difference between an injector electrode and a return electrode in order to inject current into the formation via the mud in the borehole. The injector is typically made up of an array of small imaging buttons.

The current from each button and the voltage between the injector and return are measured.

The impedance (voltage/current) seen by each button is indicative of the resistivity of a small volume of formation in front of each button. The area of the return electrode is usually much larger than the size of the injector. This is to allow the current tube to spread out between the injector and return electrodes to ensure a high sensitivity and good resolution in front of the imaging buttons and low sensitivity and resolution in front of the return electrode.

Examples of such tools can be found in US4,468,623, US4,567,759 and US4,614,250.

In conductive (water-based) mud, the injector imaging buttons are typically surrounded by a guard electrode that is held at the same potential as the button electrode to force the current into the formation, in the manner of the LL3 or passively focussed laterolog principle. The return electrode is typically situated on a distant part of the tool mandrel separated from the injector section by an insulator section.

In non-conductive (oil-based) mud, a guard electrode is not essential if the formation is more conductive than the mud at the frequency of operation.

In non-conductive oil-based mud conventional tools are of limited use because the impedance measured is generally dominated by the mud impedance, $Z_m$, between the injection electrode and formation that is in series with the formation impedance $Z_f$.

Acceptable images can be obtained in resistive formations where the formation resistance is of the same order or higher than the mud impedance. When the formation resistivity is below about 1000 $\Omega$.m the images are usually more sensitive to the thickness of mud between the pad and the borehole than to the formation resistivity so that the images reflect borehole rugosity and pad standoff (distance from pad to borehole).

The range of resistivities encountered in boreholes of interest in hydrocarbon exploration is approximately 0.1 to 20000 $\Omega$.m. To enable imaging through oil-based mud in formations of lower resistivity than 1000 $\Omega$.m, two approaches have been taken. The first was to adopt a different measurement principle, the four-terminal method, described in US 6191588. The second was to increase the frequency of injection-type tools in order to reduce the mud impedance (US2749503, US3793181). The Earth Imager wireline tool of Baker Atlas operates at 1 MHz and uses a distant mandrel return.

In order to make images in the lowest-resistivity formations (as low as 0.1 or 0.2 $\Omega$.m), frequencies higher than 1 MHz have been proposed, when it becomes advantageous to use a nearby return on the same pad as the imaging array or on an adjacent pad (US7066282). The maximum useful frequency is thought to lie in the range 20-100 MHz, as beyond this range of frequencies the skin depth in the formation is very shallow at low resistivities and the pad dimensions become comparable to the electromagnetic wavelength.

The disadvantage of having the current returns on the pad and operating at extremely high frequency is that different pads are needed to operate in water-based mud and oil-based mud. Not only is the electrode configuration different, with the return being positioned on the pad compared to the return being positioned on a distant part of the tool, but also the electronic design for frequencies of ~10 MHz is completely different from the design for ~10 kHz.

## Disclosure of the invention

This invention provides an apparatus for investigating a formation surrounding a borehole, comprising:

- a first electrode for injecting a current into the formation;
- a guard electrode adjacent the first electrode, the guard electrode being held at the same voltage as the first electrode;
- a return electrode, insulated from and spaced from the first electrode and guard electrode, for returning current passing through the formation from the first electrode and guard electrode; and
- a signal source connected between the first electrode and the return electrode and operable to generate an injection current at either a first, lower frequency suitable for measurements when the borehole is filled with a substantially conductive fluid, or a second, higher frequency for measurements when the borehole is filled with a substantially non-conductive fluid.

The first frequency can be 1 to 20kHz and the second frequency can be 50kHz to 1MHz.

The apparatus can further comprise measurement circuitry for determining the amplitude and phase of the current injected by the first electrode, and the amplitude and phase of the voltage between the first electrode and the return electrode.

The signal source is operable to apply the signal at the first or second frequency between the first electrode and the return electrode, via an impedance adaptor. The impedance adaptor can be a transformer.

The measurement circuitry can comprise an amplifier for deriving a signal from the current injected by the first electrode, the amplifier having an operating frequency range that encompasses both the first and second frequencies. The measurement circuitry can also comprise an analogue to digital converter that samples at a frequency of at least twice the second frequency.

One embodiment of the apparatus comprises multiple first electrodes mounted on a pad that can be positioned adjacent the borehole wall, each electrode being connected to the signal source. Alternatively, multiple first electrodes can be mounted on multiple pads. The return electrode can be provided on a tool body and can be separated from the pad by an insulating section. Two return electrodes can be provided, above and below the pad, each separated by a respective insulating section. In this case, the signal source applies the signal to both return electrodes, or alternatively two sources can be used.

The apparatus can comprise a wireline tool or a logging while drilling tool. When comprising a logging while drilling tool, the first electrode or multiple first electrodes can be on a rotating bottomhole assembly.

A second aspect of the invention provides a method for electrically investigating a borehole, comprising:

- applying a signal to a first electrode to inject a current into the formation;
- holding a guard electrode adjacent the first electrode at the same voltage as the first electrode; and
- receiving a current passing through the formation from the guard electrode and first electrode at a return electrode, insulated from and spaced from the guard electrode and first electrode;

wherein the step of applying the signal comprises applying a signal at either a first, lower frequency suitable for measurements when the borehole is filled with a substantially conductive fluid, or a second, higher frequency for measurements when the borehole is filled with a substantially non-conductive fluid.

The first frequency can be in the range 1 to 20kHz and the second frequency can be in the range 50kHz to 1MHz.

The method can comprise measuring the amplitude and phase of the current injected, and the amplitude and phase of the voltage between the first electrode and the return electrode

The method can comprise determining the amplitude and phase of the impedance or admittance from complex measurements of current at the first electrode and voltage between the first electrode and the return electrode. This can include calculating the real part of the complex impedance. Alternatively, it can involve determining the phase angle of the impedivity of the fluid in the borehole and identifying a phase component of the complex impedance orthogonal to the phase angle of the fluid.

The method according to the invention can be used to derive an image of the formation surrounding the borehole.

Further aspects of the invention will be apparent from the following description.

**Brief description of the drawings**

Figure 1 shows; a partial cross-section view of a part of a typical current injection tool according to an embodiment of the invention;
Figure 2 shows an examples of a wireline imaging tool according to an embodiment of the invention;
Figure 3 shows an equivalent circuit of impedances as seen by an imaging electrode;
Figure 4 shows a plot of frequency versus minimum formation resistivity for images using amplitude and phase measurements;
Figure 5 shows a further embodiment of the invention;
Figure 6 shows a signal generation circuit; and
Figure 7 shows a signal acquisition chain.

**Mode(s) for carrying out the invention**

This invention finds particular application in tools using current injection measurements in order to obtain micro-electric images of a borehole wall. Such tools inject AC current into the formation from one or more small electrodes (called "buttons") and measure the current from each button and the voltage between the imaging buttons and a return electrode. The imaging button is surrounded by a guard electrode to force the current into the formation.

The imaging buttons plus guard electrode compose the injector. The impedance (voltage/current) seen by each button is indicative of the resistivity of a small volume of formation in front of each button.

Such tools can be adapted for wireline use, in which an array of imaging buttons is at equipotential with a guard electrode on a pad (laterolog principle) and the return is on a distant part of the tool mandrel. Wireline tools usually have several pads to achieve good coverage of the borehole circumference. Such tools can also be adapted as logging-while drilling tools, which are able to achieve full coverage of the borehole with a limited number of electrodes by drill-string rotation. Laterolog principles are used, sometimes with additional focusing by hardware or software.

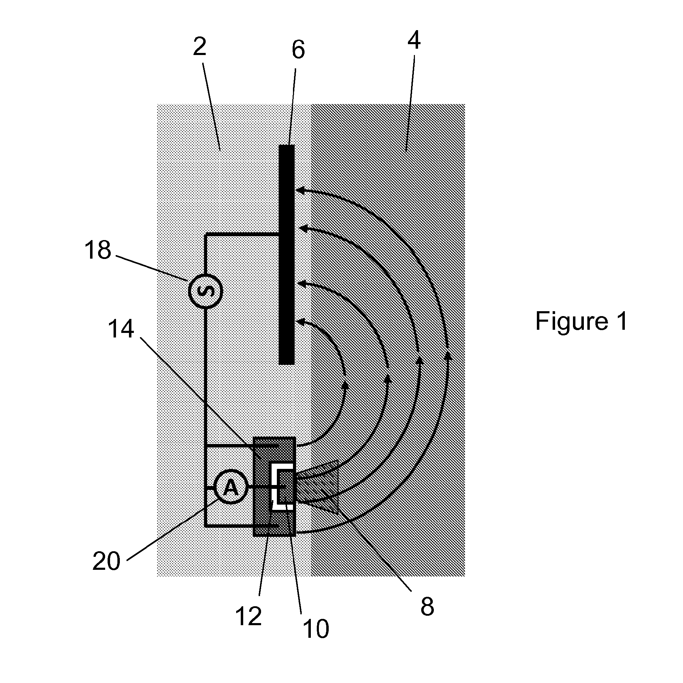

Figure 1 shows a partial cross-section of the current injection principle. A tool located in the fluid 2 in a borehole surrounded by a rock formation 4. A button, or injection electrode, 10 is responsible for injecting current into the formation 4 which returns to the tool via a return electrode 6. The imaging button 10 has a sensitive imaging region 8 and is insulated 12 from and adjacent to a guard electrode 14, the imaging button and guard being held at the same potential. A voltage source 18 generates a potential difference between the imaging button 10 (and equipotential guard electrode 14) and the return electrode 6. Since these electrodes are at different potentials, a current is injected into the formation which follows the paths indicated. An ammeter or current measurement circuit 20 measures the current injected into the formation.

It is possible to determine the complex impedance Z by dividing the known generated complex voltage by the known complex current. A complex parameter, i.e. voltage V, current I or impedance Z, has an in-phase (or real) component as well as a quadrature (imaginary) component if represented on Cartesian axes. Alternatively, if a polar co-ordinate system is used, complex parameters can also be represented in terms of an amplitude and phase component.

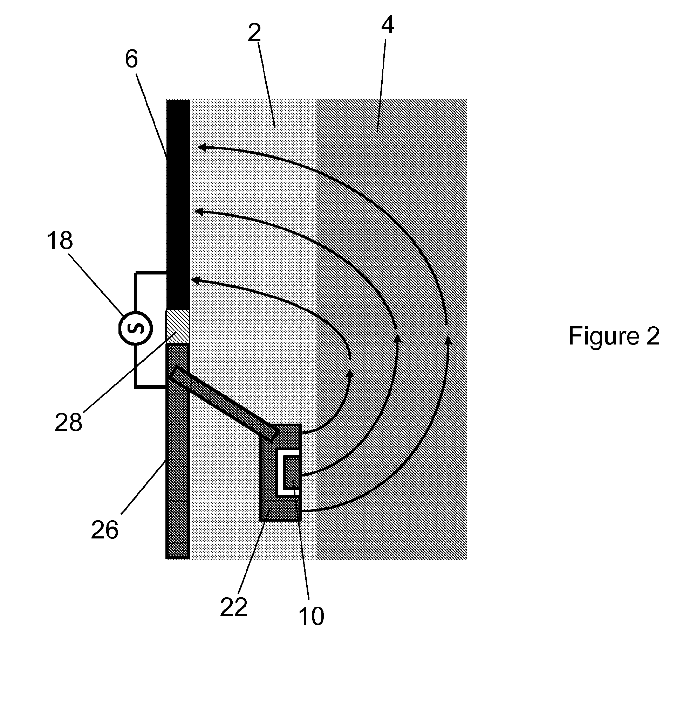

Figure 2 shows an imaging tool based on the current injection principle described above. In this case, the button electrode and guard are mounted on a pad 22 that is mounted on the end of an arm 24 that is extendable from a tool body 26. The return electrode 6 is mounted on a different part of the tool body 26 and is separated from the pad arm by an insulating section 28. The source 18 is connected across the insulating section.

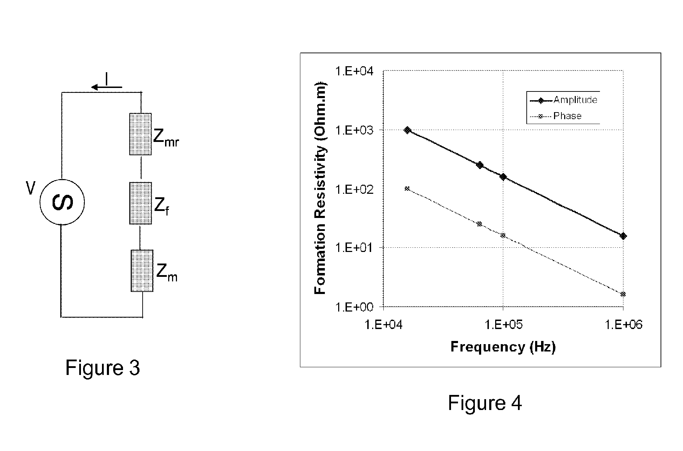

Figure 3 shows an approximate electrical equivalent circuit of the impedances seen by an imaging button. Specifically, the measured impedance comprises the fluid (mud) impedance between the button and formation, $Z_m$, the formation impedance $Z_f$ and the fluid return impedance between the return and formation $Z_{mr}$, in series.

The mud impedance between the return and formation $Z_{mr}$ can usually be neglected compared to the mud impedance between the injection electrode and the formation $Z_m$ such that the total impedance Z is given by

$$Z = Z_m + Z_f$$

where

$$Z_m = ( d_m /A_m )/ \sigma^*_m$$

$$Z_f = ( d_f /A_f )/ \sigma^*_f ;$$

and the complex conductivity (also called admittivity) $\sigma^*$ is given by:

$$\sigma^* = \sigma + i\omega\varepsilon$$

wherein d is the effective distance along the current path, A is the effective area of the current path, $\varepsilon$ is the permittivity and $\omega$ is the angular frequency. Subscripts m and f refer to mud and formation respectively.

The concept underlying the invention is to allow tool configurations previously used only for water-based mud imagers (i.e. low mud impedance) to operate in both water-based muds and oil-based muds. This is achieved by making two improvements to the existing current injection tool approach.

The first is by adding a second, higher frequency of operation specifically for operation in oil-based mud. Typically, water-based mud imagers operate in the frequency range from 1 to 20 kHz (for example, Schlumberger's FMI operates at 16 kHz). The second frequency can be in the range 50 kHz to 1 MHz (for example around 100 kHz) so that the mud effectively acts as a capacitance for the measuring current and the capacitive impedance is effectively reduced. This is achieved by providing a signal source with outputs at the two desired frequencies.

The second improvement is achieved by recording both amplitude and phase of the button currents and the voltage between the injector and return. This allows improved processing to reduce the effect of the mud standoff between the buttons and the formation. Such processing can include:

a. Calculation of the amplitude and phase of the impedance (or admittance) seen by each button, where:

Admittance = Ib/ V
Impedance = V/Ib
Ib = button current
V = voltage between injector and return
and both current and voltage are complex measurements,
having a real and imaginary component;

b. Calculation of the real part of the impedance seen by a button as proposed in US7066282; or
c. "Orthogonal processing" as proposed in European patent application 08168134.

With these improvements, the same tool can be used for both oil-based mud and water-based mud without changing any hardware.

In oil-based mud, such a tool would be suitable for imaging high-resistivity formations such as carbonates, for example. A minimum formation resistivity at which acceptable images can be anticipated can be extrapolated from experience with the FMI, as shown in the upper curve of Figure 4. When phase information is used to reduce the sensitivity to standoff, the minimum resistivity is reduced by about an order of magnitude, as shown in the lower curve. For example, at a frequency of 100 kHz and using the amplitude of the measured admittances, acceptable images are expected when the formation resistivity is above about 100 $\Omega$.m. Using processing based on both amplitude and phase information, images are possible from about 10 $\Omega$.m .

The invention is applicable to conveyance by all the usual methods, such as wireline, on pipe in memory mode, or logging while drilling.

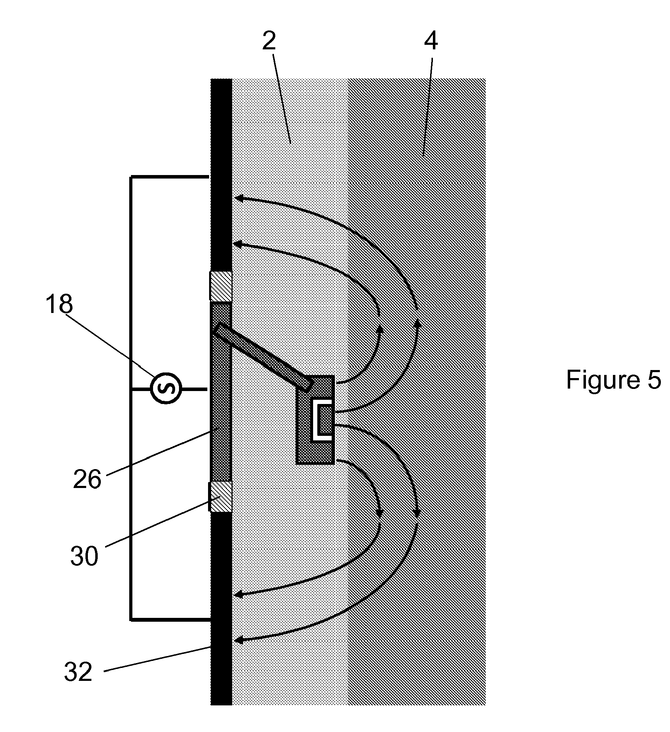

In the wireline case, the tool will often be lowest in the tool string. However, an alternative embodiment, as shown in Figure 5, allows for the possibility of through-wiring and provides an additional isolation section 30 below the arms and a second current return 32 below the insulator 30. Additional insulation sections can be envisaged to limit the effects of wave transmission along the annulus in oil-based mud, as described in WO 2008/077477.

Memory-mode tools can be conveyed on or through drill pipe, or on coiled tubing. The tools can be powered by battery, and data stored in memory down hole. The tools are released into open hole only after the pipe nears bottom, once on bottom, the tools remain anchored to the pipe, acquiring data while tripping out. The memory-mode tool can have a similar layout to the wireline tool, with the imaging buttons mounted on pads pressed against the borehole wall, but the tool diameter may be smaller in order to pass through the pipes.

The logging-while-drilling tool can include one or more imaging buttons on the rotating bottom-hole assembly. The imaging buttons should preferably be mounted on a pad or stabilizer that is close to the borehole wall in order to minimize mud standoff effects in oil-base mud.

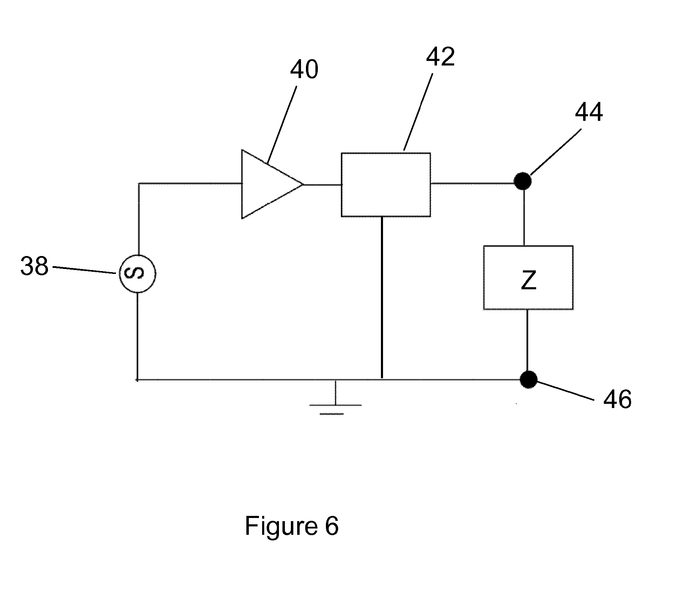

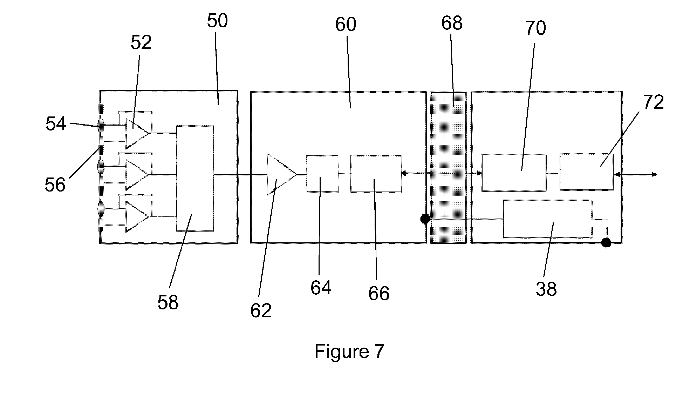

A typical electrical architecture for a wireline tool is shown in Figures 6 and 7. The output of a generator 38 capable of operating at either of two frequencies is amplified 40 and fed through an impedance adaptor 42 (for example, transformer) to the injector 44 and return electrodes 46 (connected to the load Z due to the borehole and formation). Inside the pad 50, the button currents are amplified by current amplifiers 52 that maintain the buttons 54 in equipotential with the guard electrode 56 then multiplexed 58 to an acquisition circuit 60. After amplification using an automatic gain control amplifier 62, the signals are digitized 64 and processed 66 to calculate the in-phase and out-of phase components (real and imaginary components). The processed signals pass through the insulation section 68 via an optocoupler 70. The telemetry circuit 72 transmits the data to surface via the wireline.

The amplifiers 52, 62 have a frequency bandwidth that includes both operating frequencies and the analog-digital converter 64 has a sampling frequency at least twice the upper operating frequency.

The physical location of the electronic circuits can vary. For example, the acquisition circuit 60 can be inside the pad for optimum data quality and reduced wiring. Alternatively, there may be no electronics inside the pad if there is insufficient space.

Other changes can be made while staying within the scope of the invention.

## Claims

1. Apparatus for investigating a formation surrounding a borehole, comprising:

   - a first electrode for injecting a current into the formation;
   - a guard electrode adjacent the first electrode, the guard electrode being held at the same voltage as the first electrode;
   - a return electrode, insulated from and spaced from the first electrode and guard electrode, for returning current passing through the formation from the first electrode and guard electrode; and
   - a signal source connected between the first electrode and the return electrode and operable to generate an injection current at either a first, lower frequency suitable for measurements when the borehole is filled with a substantially conductive fluid, or a second, higher frequency for measurements when the borehole is filled with a substantially non-conductive fluid.

2. Apparatus as claimed in claim 1, wherein the first frequency is in the range 1 to 20kHz and the second frequency is in the range 50kHz to 1MHz.

3. Apparatus as claimed in claim 1 or 2, further comprising measurement circuitry for determining the amplitude and phase of the current injected by the first electrode, and the amplitude and phase of the voltage between the first electrode and the return electrode.

4. Apparatus as claimed in claim 3, wherein signal source is operable to apply the signal at the first or second frequency between the first electrode and the return electrode, via an impedance adaptor.

5. Apparatus as claimed in claim 4, wherein the impedance adaptor is a transformer.

6. Apparatus as claimed in claim 3, 4 or 5, wherein the measurement circuitry comprises an amplifier for deriving a signal from the current injected by the first electrode, the amplifier having an operating frequency range that encompasses both the first and second frequencies.

7. Apparatus as claimed in any of claims 3-6, wherein the measurement circuitry comprises an analogue to digital converter that samples at a frequency of at least twice the second frequency.

8. Apparatus as claimed in any preceding claim, comprising multiple first electrodes mounted on a pad that can be positioned adjacent the borehole wall, each electrode being connected to the signal source.

9. Apparatus as claimed in claim 8, wherein the multiple first electrodes are mounted on multiple pads.

10. Apparatus as claimed in claim 8 or 9, wherein the return electrode is provided on a tool body and is separated from the pad by an insulating section.

11. Apparatus as claimed in claim 10, wherein two return electrodes are provided, above and below the pad, each separated by a respective insulating section.

12. Apparatus as claimed in claim 11, wherein the signal source applies the signal to both return electrodes.

13. Apparatus as claimed in any preceding claim, comprising a wireline tool or a logging while drilling tool.

14. Apparatus as claimed in any preceding claim, comprising a logging while drilling tool wherein the first electrode or multiple first electrodes are on a rotating bottomhole assembly.

15. A method for electrically investigating a borehole, comprising:

   - applying a signal to a first electrode to inject a current into the formation;
   - holding a guard electrode adjacent the first electrode at the same voltage as the first electrode; and
   - receiving a current passing through the formation from the guard electrode and first electrode at a return electrode, insulated from and spaced from the first electrode;

   wherein the step of applying the signal comprises applying a signal at either a first, lower frequency suitable for measurements when the borehole is filled with a substantially conductive fluid, or a second, higher frequency for measurements when the borehole is filled with a substantially non-conductive fluid.

16. A method as claimed in claim 15, wherein the first frequency is in the range 1 to 20kHz and the second frequency is in the range 50kHz to 1MHz.

17. A method as claimed in claim 15 or 16, comprising measuring the amplitude and phase of the current injected, and the amplitude and phase of the voltage between the first electrode and the return electrode.

18. A method as claimed in claim 17, comprising determining the amplitude and phase of the impedance or admittance from complex measurements of current at the first electrode and voltage between the first electrode and the return electrode.

19. A method as claimed in claim 18, comprising calculating the real part of the complex impedance.

20. A method as claimed in claim 18, comprising determining the phase angle of the impedivity of the fluid in the borehole and identifying a phase component of the complex impedance orthogonal to the phase angle of the fluid.

21. A method as claimed in any of claims 15-20, comprising deriving an image of the formation surrounding the borehole.

Figure 1

Figure 2

Figure 3

Figure 4

Figure 5

Figure 6

Figure 7

Europäisches
Patentamt
European
Patent Office
Office européen
des brevets

**EUROPEAN SEARCH REPORT**

Application Number

EP 09 17 4014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/133262 A1 (CHEN YONG-HUA [US] ET AL) 23 June 2005 (2005-06-23) * paragraphs [0006], [ 0012] - [0016], [ 0034], [ 0037], [ 0039], [ 0042] * ----- | 1-2, 8-16,21 | INV. G01V3/24 |
| X | WO 2007/024533 A2 (BAKER HUGHES INC [US]; BESPALOV ALEXANDRE N [US]; ITSKOVICH GREGORY B) 1 March 2007 (2007-03-01) * paragraphs [0015] - [0024] * ----- | 1,3-7, 15-20 | |
| X | US 2008/278171 A1 (ITSKOVICH GREGORY B [US] ET AL) 13 November 2008 (2008-11-13) * paragraphs [0007], [ 0019] - [0026] * ----- | 1,15 | |
| X | US 2003/210061 A1 (FABRIS ANTONIO [US] ET AL) 13 November 2003 (2003-11-13) * paragraphs [0013], [ 0024], [ 0025]; figures 3,4 * ----- | 1,15 | |
| X | WO 2007/070777 A2 (HALLIBURTON ENERGY SERV INC [US]; HU GUOYU [US]; BITTAR MICHAEL [US];) 21 June 2007 (2007-06-21) * page 6, line 3 - page 10, line 2 * ----- | 1,15 | TECHNICAL FIELDS SEARCHED (IPC) G01V |

The present search report has been drawn up for all claims

| Place of search | Date of completion of the search | Examiner |
|---|---|---|
| Munich | 22 March 2010 | Thomas, Judith |

EPO FORM 1503 03.82 (P04C01)

EP 2 315 056 A1

## ANNEX TO THE EUROPEAN SEARCH REPORT
## ON EUROPEAN PATENT APPLICATION NO.

EP 09 17 4014

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2010

| Patent document cited in search report | Publication date | Patent family member(s) | Publication date |
|---|---|---|---|
| US 2005133262 A1 | 23-06-2005 | NONE | |
| WO 2007024533 A2 | 01-03-2007 | BR PI0615303 A2<br>CA 2619993 A1<br>CN 101268385 A<br>EA 200800459 A1<br>EP 1929332 A2<br>US 2007046290 A1 | 04-08-2009<br>01-03-2007<br>17-09-2008<br>29-08-2008<br>11-06-2008<br>01-03-2007 |
| US 2008278171 A1 | 13-11-2008 | NONE | |
| US 2003210061 A1 | 13-11-2003 | AU 2003243208 A1<br>EP 1567890 A1<br>WO 03096074 A1 | 11-11-2003<br>31-08-2005<br>20-11-2003 |
| WO 2007070777 A2 | 21-06-2007 | CA 2611789 A1<br>EP 1938235 A2<br>US 2008252296 A1 | 21-06-2007<br>02-07-2008<br>16-10-2008 |

**EP 2 315 056 A1**

## REFERENCES CITED IN THE DESCRIPTION

**Patent documents cited in the description**

- US 4468623 A
- US 4567759 A
- US 4614250 A
- US 6191588 B
- US 2749503 A
- US 3793181 A
- US 7066282 B
- EP 08168134 A
- WO 2008077477 A